Europäisches Patentamt

European Patent Office

Office européen des brevets

(11) Publication number: **0 469 104 A1**

# EUROPEAN PATENT APPLICATION
## published in accordance with Art. 158(3) EPC

(21) Application number: 91903141.9

(22) Date of filing: **23.01.91**

(86) International application number:
**PCT/ES91/00005**

(87) International publication number:
**WO 91/11318 (08.08.91 91/18)**

(51) Int. Cl.5: **B29C 67/18, F16G 11/00**

(30) Priority: **01.02.90 ES 9000301**

(43) Date of publication of application:
**05.02.92 Bulletin 92/06**

(84) Designated Contracting States:
**AT BE DE FR GB IT NL SE**

(71) Applicant: **PUJOL Y TARRAGO, S.A.**
**Avenida Castellbisbal s/n**
**E-08191 Rubi(ES)**

(72) Inventor: **SOLANO SALLAN, Victorino**
**Calle Montseny, 18**
**E-08191 Sant Cugat del Valles(ES)**
Inventor: **ROCA CABESTANY, Agustin**
**Paseo del Ferrocarril, 1**
**E-08191 Rubi(ES)**

(74) Representative: **Schwabe, Hans-Georg,**
**Dipl.-Ing. et al**
**Patentanwälte Schwabe, Sandmair, Marx**
**Stuntzstrasse 16**
**W-8000 München 80(DE)**

(54) **METHOD FOR HIGH RESISTANCE COUPLING OF TERMINALS TO ROPE ENDS.**

(57) The end (E) of the rope (1), which is provided with a protection sheath (2), is unsheathed and unbraided on an extreme portion (PE) of relatively small length, which portion (PE) is subjected to a process of impregnation with hardenable viscous liquid (LV), obtained from epoxide resins, so as to form a thickenssing (RE), Then, the portion (PE) of rope (1) impregnated with viscous liquid (LV) is allowed to set till it reaches the appropriate hardness. Thereafter, the connection terminal (4) made of plastic or metal material is applied by injection, while embracing a sufficient length of the end (E) of the rope (1), which end remains embedded in the mass (M) of injected material. After cooling the connection terminal (4), the coupling may be used normally. Application to the car industry.

FIG.3

Technical field of the Invention

The object of the present invention is a process for joining high strength terminals to ends of cords in general, and in particular, applicable to cords designed for carrying out mechanical functions of transmission of relatively high forces, such as the functions carried out by the metal cables which are used in motor vehicle control devices.

Background of the Invention

The use of steel cables, provided or otherwise with sheaths adapted to each particular application, is well known. Such cables are used as connecting or joining members between the mechanisms forming a large number of control devices. As an example of this type of cable, there may be mentioned, among others, the cable connecting the accelerator pedal with the corresponding carburettor mechanism of a vehicle engine.

The said known steel cables are provided at the ends thereof with the corresponding terminals, whose design allows them to be connected or engaged, generally with the possibility of assembly and disassembly at will, with points contemplated for that purpose in the mechanisms forming the said control devices.

The use of steel cables implies, from the very nature thereof, the following problems: the cables are subject to corrosion processes which sooner or later reduce the efficacy of their operative capacity or even override it, depending on the conditions under which they operate and the degree of protection with which they are provided; low fatigue resistance in view of the limited bending capacity; and a large storage volume, which is required precisely for the relative rigidity of these cables.

The above mentioned problems are in conflict with the current trends in component design and production which are, among others, an increase of reliability and constant performance, a reduction of weight and a reduction of costs in general.

Cords prepared from artificial fibre materials having a very high tensile strength and a virtual linear indeformability are well known on the market. It is, consequently, obvious for any expert in the art to start out from these cords produced from artificial fibres and apply the corresponding connexion terminals to the ends thereof, with the view of trying to manufacture a product which is capable of replacing the steel cables in the above mentioned functions.

Nevertheless, such cords provided with connexion terminals provide a partial solution to the problem of finding a replacement for the steel cables since, although the mechanical properties of these cords are perfectly satisfactory for the majority of requirements of replacement of steel cables, the same does not happen with the joint of the end or ends of the cord to the corresponding connexion terminals.

In fact, the inventor is aware that tests have been carried out by several research teams without any positive result. According to these tests, the joint of the terminal with the corresponding end of the cord has a tensile strength very much lower that the tensile values required for replacing the known steel cables, with detachment of the terminal generally occurring, i.e. the terminal or terminals become separated from the cord.

To summarize, the attempt to replace the known steel cables by artificial fibre cords for the performance of certain mechanical functions suffers from the drawback of attaining a strong, resistant joint between the ends of the cord and the corresponding terminals.

Summary of the Invention

To provide a solution to the problem of the very limited tensile strength of the joint of connexion terminals to ends of cords made from artificial fibre materials, there is disclosed a process for joining terminals to cord ends which provides a very strong joint.

The process according to the invention is characterised in that the cord, prepared preferably from artificial fibre materials and provided with a protective sheath appropriate for the working conditions which may be contemplated, is stripped of the sheath and unravelled at the end portion thereof which is to be joined to the connexion terminal over a relatively short length. Said cord portion is thereafter impregnated with a viscous liquid which is a hardenable mixture of products prepared from epoxy resins so that the said impregnated cord portion takes on a cross section much greater than the cord cross section, i.e. it becomes thickened.

Thereafter, the cord portion impregnated with the viscous liquid is allowed to set for a variable period of time until the appropriate degree of hardness is attained.

To accelerate the the setting stage of the cord portion impregnated with viscous liquid, it may be heated to above room temperature, since the higher the temperature is, the shorter is the time required to attain the appropriate degree of hardness. For example, an adjustable temperature oven may be used.

Once the setting stage is completed, i.e. the desirable hardness has been attained, a terminal, which may be of plastics material or metal, is injected over the thickened end of the cord, covering a sufficient length of said cord end, which is totally included with in the mass of the injected material.

When the process of injecting the terminal on the cord end is completed, it is allowed to cool to room temperature and, once cooled, it is in a condition to be used normally.

The said terminal injected on the end of the cord and which, as stated hereinbefore, may be made from plastics material or metal, may have any shape appropriate for each particular application.

According to the invention, the joint achieved between the terminal and the cord end has a high tensile strength, completely in accordance with the tensile strength of the cord itself.

The cord used in the process of the invention is formed by artificial fibre threads or a mixture of several artificial fibres, there being chosen in each case the constitution deemed to be most appropriate for carrying out the design functions and to be able to withstand the corresponding demands.

Brief Description of the Drawing

In the drawing sheet there is described the process of the invention applied to the joining of a connexion terminal to the end of a cord of artificial fibre material, said cord being provided with a protective sheath. In said sheet:

Figure 1 is the view corresponding to a portion of cord to which the process of the invention is applied.

Figure 2 shows the same cord in an intermediate process stage.

Figure 3 is a detail view, partly in section.

Figure 4 is a perspective view showing the cord as it appears at the end of the process.

Detailed Description of the Embodiment

The embodiment of the process of the invention described hereinafter relates to the joining of a connexion terminal to the end of a cord of artificial fibre material.

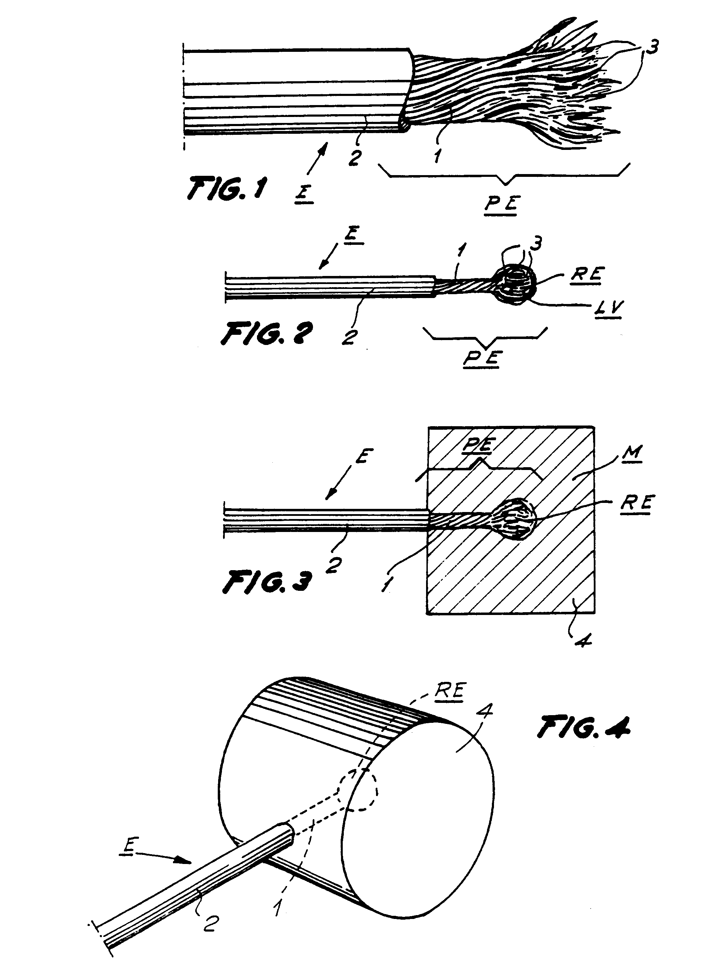

Figure 1 of the accompanying sheet of drawings shows in detail a cord 1 and, more particularly, the end E thereof. Said cord 1 is provided with a protective sheath 2. In the embodiment here described the diameter of the cord 1 ranges from 1 to 3 mm, the tensile strength thereof being about 1000 Nw to 5800 Nw, respectively.

According to the process of the invention, the end E of the cord 1 has the protective sheath 2 removed over the portion PE, which is relatively short as shown in detail in Figures 1, 2 and 3 of the drawing sheet.

The cord used is made of artificial fibre, precisely aramid fibre manufactured by ROBLON AS, of Denmark, under the commercial reference of KEVLAR.

As a result of the tests performed, it has been determined that the length of the portion PE of the cord 1 with which results fully appropriate for the contemplated end purpose have been obtained ranges from 2 to 5 mm.

Figure 1 shows how the bundle of threads 3 forming the cord 1 is, according to the process of the invention, unravelled or separated, with a view to creating the conditions adequately allowing for the subsequent impregnation with the mixture of hardenable viscous liquid.

There is advantageously chosen a cord 1 of artificial fibre in which the unravelling occurs spontaneously to a sufficient extent when the portion of sheath 2 covering the portion PE is stripped off. The cord 1 used in these tests had the said advantageous property of spontaneous unravelling.

Once the bundle of threads 3 of the portion PE has been suitably unravelled it is subjected, according to the process of the invention, to impregnation with a viscous liquid LV prepared from epoxy resin. In this way there is formed on the portion PE of the cord 1 the thickened portion RE which is shown in detail in Figures 2 and 3 of the drawings, where said irregular shaped thickened portion RE is seen to have a much larger cross section than the cross section of the cord 1 itself.

Thereafter said portion PE impregnated with viscous liquid LV is allowed to set, i.e. it is allowed to harden.

The hardening of the portion PE impregnated with viscous liquid LV takes place at room temperature until the appropriate degree of hardness has been obtained. Under these conditions, i.e. at room temperature, the setting stage requires a time ranging from 2 hours to 24 hours.

The relatively long duration of the setting stage of the portion PE impregnated with viscous liquid LV may represent a drawback in certain production processes limiting or reducing the production capacity. For this reason, to reduce the time required for said setting stage, the portion PE impregnated with viscous liquid LV may be treated at a temperature above room temperature, since the higher the temperature, the shorter is the time required to attain the appropriate degree of hardness.

The temperatures above room temperature required for accelerating the above described setting stage may be obtained in very many ways. Outstanding among them for the operative flexibility thereof is the use of suitably sized ovens and the use of infra red ray generators.

In both cases, i.e. ovens and infra red ray generators, the temperature may be adjusted to the appropriate value required for hardening the portion PE impregnated with viscous liquid LV by relatively simple means.

Thereafter, the portion PE impregnated with hardened viscous liquid LV is inserted in a mould which, for greater clarity, has not been shown in the drawing sheet, where the connexion terminal 4 is applied thereto by injection, as shown in Figure 3. If plastics material is injected, the mass M is injected at a temperature of approximately 250 ˚C. If metal is injected, the mass M of metal is injected at a temperature of approximately 400 ˚C.

The said Figure 3 shows in detail how the portion PE of the end E of the cord 1 is totally included in the mass M of injected material forming the connexion terminal 4.

If plastics material is injected, polyamide with glass fibre filling in an amount appropriate to achieve a high mechanical breaking strength is used. If metal is injected, zinc and aluminium or copper alloys are preferably used, i.e. Zamak alloys which also have a high mechanical breaking strength.

The injection of one or the other type of material, i.e. plastics or metal, for producing the connexion terminal 4 attached to the end E of the cord 1, has not offered any notable differences in the tests performed with regard to the tensile strength of the thus formed joint, whereby both materials may be used as desired with results fully satisfactory for the contemplated purpose.

After the mass M of material forming the connexion terminal 4 has been injected into the injection mould, the said connexion terminal 4 is removed from the mould attached to the end E of the cord 1 and, generally at room temperature, it is allowed to cool for a few minutes, after which the joint formed by said terminal 4 and cord 1 may be used normally.

In the embodiment here described, the connexion terminal 4 is approximately cylindrical as shown in detail in perspective in Figure 4 of the drawing sheet. Nevertheless, said terminal may have any other shape which is appropriate for each particular application in appropriate geometrical conformity with the housing and/or engaging means available for the purpose in the devices using the cord provided with the terminal of the invention.

As stated above, Figure 4 is a perspective view of the joint produced according to the invention between the connexion terminal 4 and the end E of the cord 1. Under these conditions, in accordance with the tests performed, the unit joint thus formed has a tensile strength, i.e. resistance to detachment of the connexion terminal 4 from the end E of the cord 1 of up to 4000 Nw, which value is in agreement with the 5800 Nw tensile strength cited above for the 3 mm diameter cord 1 used in this embodiment.

Other embodiments

Other embodiments have been produced following the same operative process as described above and, therefore, illustrated in the same drawings with regard to the essential features thereof. The details and results of said embodiments are given in TABLE I below:

## TABLE I

No. = Example number

D = cord diameter, in mm.

T = setting time of the resin, in hours. In all cases, two component epoxy resin was used.

R = maximum tensile strength in Nw. The tensile strength was tested 24 hours after application of the injected terminal.

| No. | Type of artificial fibre | D mm | T mm | Material of injected terminal | R Nw |
|-----|--------------------------|------|------|-------------------------------|------|
| 2 | Aramid | 1,5 | 12 | Polyamide 6.6 with 30% glass fibre | 1560 |
| 3 | Aramid | 1,5 | 12 | Zamak-3 | 1450 |
| 4 | Aramid | 2 | 12 | Polyamide 6.6 with 30% glass fibre | 1980 |
| 5 | Aramid | 2 | 12 | Zamak-3 | 1790 |

The conclusion is reached, therefore, that the tensile strength obtained in the joint of the connexion terminal 4 with the end E of the cord 1, according to the process of the invention, makes the use of the said cord 1 possible as a replacement element which has been commonly used up to date in the connexion of numerous mechanisms and devices.

In particular, it is noted that successful tests have been performed using cords provided with terminals produced according to the invention in control devices for motor vehicles and more particularly they have been used as connecting medium between the accelerator pedal and the corresponding carburettor mechanism of a vehicle engine, advantageously replacing the usual metal cables.

## Claims

1. A process for joining high strength terminals to the ends of cords, particularly cords whose threads (3) are made from one or several artificial fibres, and are provided with a protective sheath (2), characterised in that the cord (1) is stripped of the sheath and unravelled at the end portion (PE) thereof which is to be joined to the connexion terminal (4) over a relatively short length, said stripped end portion (PE) of the cord (1) thereafter being impregnated with a viscous liquid (LV) which is a hardenable mixture of products prepared from epoxy resins, so that the said impregnated portion (PE) of the cord (1) takes on a cross section greater than the cross section of the cord (1), i.e. a thickened portion (RE) is produced and thereafter said portion (PE) of the cord (1) impregnated with the hardenable viscous liquid (LV) is allowed to set for a variable period of time until the appropriate degree of hardness is attained, on which cord portion (PE) there is thereafter added a terminal (4).

2. A process for joining high strength terminals to the ends of cords according to claim 1) characterised in that to accelerate the setting stage of the portion (PE) of cord (1) impregnated with viscous liquid (LV), it is heated to above room temperature.

3. A process for joining high strength terminals to the ends of cords according to any one of claims 1) or 2), characterised in that after the setting stage, i.e. after the desirable hardness has been attained, there is injected over the thickened end (RE) of the cord (1), a mass of material (M) of plastics or metal forming a terminal (4) covering a sufficient length of said end (PE) of the cord (1), which is totally included within the mass (M) of the injected material, said terminal (4) being thereafter allowed to cool to room temperature and, once cooled, it is in a condition to be used normally.

4. A process for joining high strength terminals to the ends of cords according to claim 3) characterised in that the terminal (4) injected on the end (PE) of the cord (1) has any shape being appropriate for the particular application.

FIG.1

FIG.2

FIG.3

FIG.4

7

# INTERNATIONAL SEARCH REPORT

International Application No PCT/ES 91/00005

| **I. CLASSIFICATION OF SUBJECT MATTER** (if several classification symbols apply, indicate all) ⁶ |
|---|

According to International Patent Classification (IPC) or to both National Classification and IPC

Int.Cl.⁵   B 29 C 67/18, F 16 G 11/00

| **II. FIELDS SEARCHED** |
|---|

**Minimum Documentation Searched** ⁷

| Classification System | Classification Symbols |
|---|---|
| Int.Cl.⁵ | B 29 C, F 16 G, F 16 C, D 07 B |

**Documentation Searched other than Minimum Documentation
to the Extent that such Documents are Included in the Fields Searched** ⁸

| **III. DOCUMENTS CONSIDERED TO BE RELEVANT** ⁹ |
|---|

| Category ° | Citation of Document, ¹¹ with indication, where appropriate, of the relevant passages ¹² | Relevant to Claim No. ¹³ |
|---|---|---|
| Y | DE, A, 3431313 (WOLFGANG LENZE) 8 August 1985 see the whole document | 1,3 |
| Y | FR, A, 2624941 (SEFAC) 23 June 1989, see abstract; page 1, lines 19-31; page 2, lines 21-33; page 3, lines 6-10,21-34; page 5, lines 5-8; page 5, line 25 - page 6, line 30; claims 1-6 | 1 |
| Y | Patent Abstracts of Japan, volume 10, No.249 (M-511)(2305), 27 August 1986, & JP, A, 6179610 (NIPPON SUEEJI KOGYO K.K.) 23 April 1986, see the whole document | 3 |
| A | | 4 |
| A | US, A, 3450810 (ROE HOWE LAGARDE) 17 June 1969, see abstract; column 1, lines 50-57; column 7, line 72 - column 8, line 20, claims 1-5; figure 24 | 2 |

° **Special categories of cited documents:** ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

| **IV. CERTIFICATION** |
|---|

| Date of the Actual Completion of the International Search | Date of Mailing of this International Search Report |
|---|---|
| 25 April 1991 (25.04.91) | 30 May 1991 (30.05.91) |

| International Searching Authority | Signature of Authorized Officer |
|---|---|
| European Patent Office | |

Form PCT/ISA/210 (second sheet) (January 1985)

# ANNEX TO THE INTERNATIONAL SEARCH REPORT
## ON INTERNATIONAL PATENT APPLICATION NO.

ES 9100005
SA    43959

This annex lists the patent family members relating to the patent documents cited in the above-mentioned international search report.
The members are as contained in the European Patent Office EDP file on 15/05/91
The European Patent Office is in no way liable for these particulars which are merely given for the purpose of information.

| Patent document cited in search report | Publication date | Patent family member(s) | | Publication date |
|---|---|---|---|---|
| DE-A- 3431313 | 08-08-85 | None | | |
| FR-A- 2624941 | 23-06-89 | None | | |
| US-A- 3450810 | 17-06-69 | BE-A- | 670715 | 31-01-66 |
| | | DE-A- | 1560004 | 20-08-70 |
| | | FR-A- | 1455474 | |
| | | NL-A- | 6513132 | 22-08-66 |
| | | US-A- | 3263289 | |